Europäisches Patentamt

European Patent Office

Office européen des brevets

(19)

(11) Publication number: **0 028 909**
**B1**

(12) **EUROPEAN PATENT SPECIFICATION**

(45) Date of publication of patent specification: **20.02.85**

(51) Int. Cl.⁴: **C 09 D 7/00, C 09 D 5/04**

(21) Application number: **80303915.5**

(22) Date of filing: **04.11.80**

(54) Thixotropic agent and compositions incorporating it.

(30) Priority: **08.11.79 JP 144834/79**

(43) Date of publication of application:
**20.05.81 Bulletin 81/20**

(45) Publication of the grant of the patent:
**20.02.85 Bulletin 85/08**

(84) Designated Contracting States:
**BE DE FR GB IT**

(56) References cited:
**DE-A-2 426 188**
**US-A-3 354 114**

(73) Proprietor: **MITSUI PETROCHEMICAL INDUSTRIES, LTD.**
**2-5, Kasumigaseki 3-chome Chiyoda-ku Tokyo 100 (JP)**

(72) Inventor: **Miura, Yoshikazu**
**407 Monzen**
**Ichihara, Chiba-ken (JP)**
Inventor: **Horimoto, Koji**
**2-2 Muronokicho 1-chome**
**Iwakuni, Yamaguchi-ken (JP)**
Inventor: **Sumida, Takenori**
**14-17 Nakamuchi 2-chome**
**Koganei, Tokyo (JP)**

(74) Representative: **Armitage, Ian Michael et al**
**MEWBURN ELLIS & CO. 2/3 Cursitor Street London EC4A 1BQ (GB)**

The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 028 909 B1

# 0 028 909

## Description

The present invention relates to thixotropic agents.

It is desirable that some kinds of compositions used in the form of a highly viscous liquid or paste, such as paints, sealing material or calking material generally called "patching compound", and adhesives have a fluidity or plasticity higher at the time of being applied, but lower after application.

Such a characteristic can be realized by providing a thixotropic property to the compositions, or the property of exhibiting high fluidity during deformation by the force of for example as prayer, roller or trowel, but losing fluidity on standing after application to prevent running or other deformation.

Hitherto finely powdered silica has been widely used as a thixotropic agent. It is, however, expensive. Bentonite and starch are also used. As far as performance is concerned, asbestos is an excellent thixotropic agent, and particularly a specially treated asbestos has been favoured because of its remarkable effectiveness. However, as the harmful effect of asbestos on human health has become more clear, the use of asbestos has come under increasingly strict control.

It is therefore desirable to find a novel thixotropic agent, which is relatively inexpensive and which is harmless, and therefore can be substituted for finely powdered silica and asbestos.

The invention is based on our discovery that a polyolefin fibre synthetic pulp having specific characteristics can serve as a satisfactory thixotropic agent.

Thermoplastic fibres have been used as thickening agents. For example, OLS 2426188 discloses the use of fine short fibres of a thermoplastic material such as polyethylene as a thickening agent for an aqueous painting or coating medium. U.S. 3354114 discloses the thickening of polyesters and polyepoxy resins with an intimate mixture of finely divided fibres of polystyrene and fine silica. However the effectiveness of polyolefin fibres as thixotropic agents does not seem to have been previously disclosed.

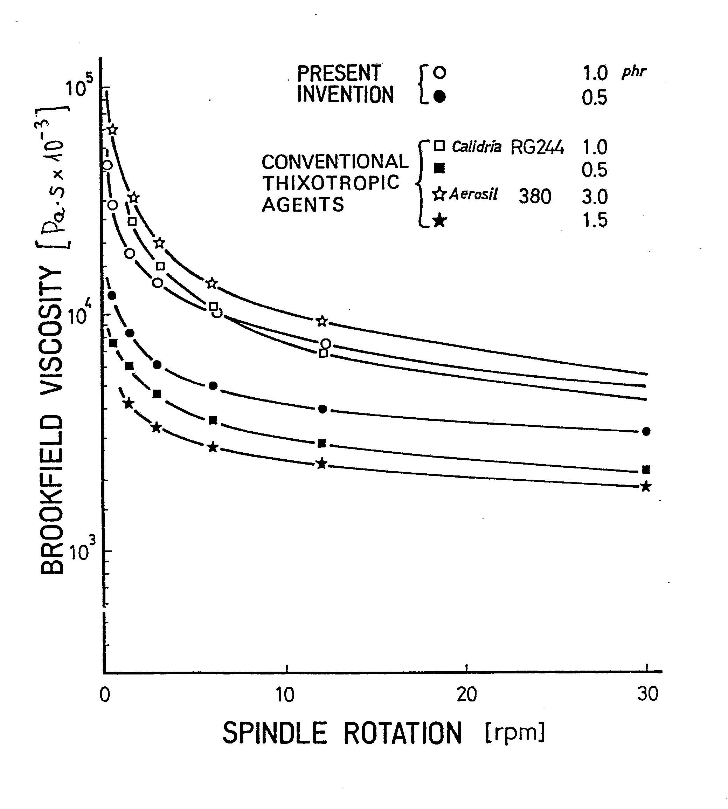

The accompanying drawing is a graph showing changes in viscosity of a polyester liquid resin, in which the thixotropic agent of the invention is used, in comparison with conventional agents.

The polyolefin fibre synthetic pulp used in the present invention should have a D.F. or "Drainage Factor" of 0.03 to 8 second/gram and an F.F. or "Floating Factor" of 100 ml or less.

The D.F. is measured by the method standardized in TAPPI-T 221. The F.F. is given by repulping a sample of 4 g in water to form a suspension of 800 ml, which is poured into a measuring cylinder of 1 litre and allowed to stand, and 2 minutes afterwards measuring the volume of the water layer which appears, owing to floating up of the specimen, in units of 5 ml.

The term "polyolefin" means polymers and copolymers of alpha-olefin or olefins such as ethylene and propylene, as well as copolymers of alpha-olefin in a major amount with one or more other olefin.

Synthetic pulp having a D.F. outside the above noted limits does not give sufficient thixotropic effect.

In the case where the material to which the present thixotropic agent is added is an aqueous system, the value of the F.F. of the agent is preferably, within the upper limit of 100 ml, as low as possible.

The preferred average diameter of the polyolefin fibre was found to be in the range 0.1 to 10 $\mu$m. The length of the fibre does not have decisive influence, though a relatively longer fibre seems to be better in giving a thixotropic property. When spraying a composition containing the present thixotropic agent, a relatively short fibre having a C.F.L. or "Classified Fibre Length" of 0.01 to 0.2 mm, preferably 0.05 to 0.18 mm, will be suitable to reduce the risk of plugging the spray nozzle.

Preparation of the polyolefin synthetic pulp having the above noted particular properties and fibre form can be carried out in accordance with methods known in the art. For example, in case of polyethylene it is recommended to choose a material of a molecular weight corresponding to a Melt Index of from 5 to some hundreds, which is dissolved in a solvent under heating; to add a hydrophilic substance such as PVA (polyvinyl alcohol) to the solution; then, to quench the solution in water so as to precipitate the polyethylene under strong shearing force; and, if necessary, to treat the precipitated pulp with a refiner. The properties and the fibre form can vary over a wide range by changing the conditions of preparation.

The thixotropic agent of the present invention using polyolefin synthetic pulp can be incorporated in any material after being added to, or simultaneously with, various additives as occasion demands.

The materials to which the present thixotropic agent can be added to control the fluidity or plasticity extend over so wide a field that it may be possible to use the present agent in all fields in which the above mentioned conventional thixotropic agents are effective. In addition to paints, sealing and calking material, and adhesives as mentioned above, plaster for walls and putty are included. Also, application to unsaturated polyester resin for producing FRP (fibre reinforced polyester) products is another important area of use for the present agent. Selection of the characteristics of the agent appropriate to the intended use enables the desired thixotropic property to be obtained, resulting in a wider scope of application.

As seen from the examples shown below, the thixotropic agent of the present invention exhibits a similar level of performance to the same amount (weight) of highly refined asbestos, and similar to finely powdered silica at three-times the amount.

2

Compared with the expensive finely powered silica, the price per the unit weight is only a few-tenths of the polyolefin fibre synthetic pulp. Moreover, the actual dose required is smaller and, therefore, the polyolefin synthetic pulp is highly advantageous over finely powdered silica as regards cost. The present thixotropic agent is also competitive with asbestos both in performance and cost, and is, so far as is known, free from harmful effect on the human body, and its supply is not restricted in the way inevitable to most naturally obtained materials. Further, because the specific gravity of the polyolefin is lower than those of conventional thixotropic agents, the composition in which the present agent is incorporated will be less dense.

Example I

To an o-phthalic acid-based unsaturated polyester resin, "Polyset 2125 G" (trade mark) produced by Hitachi Kasei K.K., polyethylene-based synthetic pulp, having D.F. of 2.5 second/gram, F.F. of 50 ml, average fibre diameter of 5 $\mu$m and C.F.L. of 0.1 mm, was added at the rate of 0.5 phr (parts per hundred of resin) or 1.0 phr. The mixtures were then stirred with a high speed stirrer for 3 minutes.

For the purpose of determining thixotropic property, a Brookfield viscosimeter, "Vismetron" (trade mark) manufactured by Seiki Kagaku Kogyo, was employed to measure the changing viscosity as the rate of rotation of the rotor is increased at room temperature.

For a comparative study, specimens were prepared by adding to the above-unsaturated polyester resin a conventional thixotropic agent, finely powdered silica, "Aerosil 380" (trade mark) produced by Degussa, at the rate of 1.5 phr or 3.0 phr, and a high performance thixotropic agent, modified asbestos, "Calidria RG-244" (trade mark) produced by UCC, at the rate of 0.5 phr or 3.0 phr; and the specimens were also subjected to the same measurement of viscosity.

The results are shown in the graph of the accompanying drawing. The data clearly show the effect of the present thixotropic agent comprising the polyolefin synthetic pulp.

Example II

To an i-phthalic acid-based unsaturated polyester resin, "Polyset 660", polyethylene-based synthetic pulp, having D.F. of 5 second/gram, F.F. of 5 ml, average fibre diameter of 3 $\mu$m and C.F.L. of 0.1 mm, was added at the rate of 0.2, 0.5, 1 or 2 phr, after being wetted with styrene of ten times its weight.

The compositions were mixed under high speed stirring for 10 minutes, followed by low speed stirring for 2 minutes to form homogeneous mixtures.

While the rate of rotation of the Brookfield viscosimeter was changing, the changing viscosity of the compositions was measured at room temperature as described in Example I.

Also, finely powdered silica, "Aerosil 380", and modified asbestos, "Calidria RG-244", were used to prepare thixotropic compositions, which were subjected to the measurement of viscosity with the rotary viscosimeter.

The results are given in Table I.

The "Thixo Index" in the Table is defined as the ratio of the viscosity measured at 6 rpm to the viscosity at 60 rpm. The larger the Index is, the greater the thixotropy.

A thixo index around 2 to 3 is suitable for a liquid resin for FRP products. The data in Table I shows that polyolefin synthetic pulp is satisfactory as a thixotropic agent for this purpose.

TABLE I

| Rate of addition (phr) | Viscosities at different rotation of rotor (rpm) | | | | Thixo index |
|---|---|---|---|---|---|
| | 6 | 12 | 30 | 60 | |
| Polyethylene synthetic pulp | | | | | |
| 0.2 | 660 | 670 | 660 | 652 | 1.01 |
| 0.5 | 920 | 810 | 716 | 656 | 1.40 |
| 1 | 1840 | 1390 | 1000 | 812 | 2.27 |
| 2 | 4720 | 3200 | 1984 | 1390 | 3.40 |
| Aerosil 380 | | | | | |
| 0.5 | 470 | 475 | 479 | 478 | 0.98 |
| 1 | 370 | 368 | 355 | 349 | 1.06 |
| 2 | 475 | 382 | 310 | 274 | 1.73 |
| Calidria RG-244 | | | | | |
| 0.2 | 640 | 640 | 640 | 630 | 1.02 |
| 0.5 | 780 | 740 | 676 | 640 | 1.22 |
| 1 | 1480 | 1130 | 816 | 670 | 2.21 |
| 2 | 4620 | 2870 | 1624 | 1122 | 4.12 |

Viscosity is given in (centipoise) Pa . s $5 \times 10^{-3}$.

Example III

The stability of the effect of the thixotropic agent of the present invention was examined over a long period of time.

To an unsaturated polyester resin, "Ester XE 8032" produced by Mitsui Toatsu Kagaku Kogyo, the polyethylene synthetic pulp used in Example II was added at the rate of 2 phr, with the same manner of mixing as in Example II.

Measurements were made at room temperature of the viscosity immediately after the mixing, and after standing at ambient temperature for 4 months. For the purpose of comparison, the same examination was conducted on a mixture containing 2 phr of the finely powdered silica, "Aerosil 380".

The experimental results are in Table II. The decrease of the Thixo Index after the elapse of 4 months was found to exceed 15% in the conventional art, while in the present invention only 1.6% decrease was observed. It is therefore confirmed that the effect of the polyethylene synthetic pulp as the thixotropic agent is stable over a long period of time.

TABLE II

| Thixotropic agents | Viscosity at low and high rotation (rpm) | | Thixo index |
|---|---|---|---|
| | 6 | 60 | |
| Polyethylene synthetic pulp | | | |
| Just after addition | 960 | 383 | 2.51 |
| 4 months after | 960 | 389 | 2.47 |
| Aerosil 380 | | | |
| Just after addition | 1165 | 428 | 2.72 |
| 4 months after | 1025 | 446 | 2.30 |

Viscosity is given in (centipoise) Pa . s $\times 10^{-3}$.

**0 028 909**

## Claims

1. A thixotropic agent comprising a polyolefin fibre synthetic pulp having a D.F. (Drainage Factor) of 0.03 to 8 second/gram, a F.F. (Floating Factor) of 100 ml or less, an average diameter of 0.1 to 10 $\mu$m, and a C.F.L. (Classified Fibre Length) of 0.01 to 0.2 mm.

2. A thixotropic agent according to claim 1 wherein the polyolefin fibre comprises polyethylene.

3. Use of a polyolefin fibre of claim 1 or claim 2 as a thixotropic agent.

4. Use of a polyolefin fibre of claim 1 or claim 2 as a thixotropic agent excluding its use in aqueous systems.

5. Use of a polyolefin fibre of claim 1 or claim 2 as a thixotropic agent in a composition for spraying onto a substrate.

6. The use of a polyolefin fibre according to any one of claims 3 to 5 wherein the fibre comprises polyethylene.

7. A composition containing a thixotropic agent of claim 1 or claim 2.

8. A composition according to claim 7 excluding aqueous systems.

9. A fibre reinforced polyester resin composition of claim 8.

10. A composition according to claim 7, 8 or 9 wherein the polyolefin comprises polyethylene.

## Patentansprüche

1. Thixotropiemittel, einen Polyolefin-Synthesefaserbrei umfassen, mit einem D.F. (Entwässerungsfaktor) von 0,03 bis 8 s/g, einem F.F. (Schwimmfaktor) von 100 ml oder weniger, einem durchschnittlichen Durchmesser von 0,1 bis 10 $\mu$m und einer C.F.L. (klassierten Faserlänge) von 0,01 bis 0,2 mm.

2. Thixotropiemittel nach Anspruch 1, worin die Polyolefinfaser Polyethylen umfaßt.

3. Verwendung einer Polyolefinfaser von Anspruch 1 oder Anspruch 2 als Thixotropiemittel.

4. Verwendung einer Polyolefinfaser von Anspruch 1 oder Anspruch 2 als Thixotropiemittel, ausgeschlossen ihre Verwendung in wässrigen Systemen.

5. Verwendung einer Polyolefinfaser von Anspruch 1 oder Anspruch 2 als Thixotropiemittel in einer Zusammensetzung zum Aufsprühen auf ein Substrat.

6. Verwendung einer Polyolefinfaser nach irgend einem der Ansprüche 3 bis 5, worin die Faser Polyethylen umfaßt.

7. Zusammensetzung, enthaltend ein Thixotropiemittel von Anspruch 1 oder Anspruch 2.

8. Zusammensetzung nach Anspruch 7, ausgeschlossen wässrige Systeme.

9. Faserverstärkte Polyesterharzzusammensetzung von Anspruch 8.

10. Zusammensetzung nach Anspruch 7, 8 oder 9, worin das Polyolefin Polyethylen umfaßt.

## Revendications

1. Agent thixotropique comprenant une pâte synthétique de fibre de polyolefine ayant un D.F. (facteur d'écoulement) de 0,03 à 8 seconde/gramme, un F.F. (facteur de flottabilité) de 100 ml ou moins, un diamètre moyen de 0,1 à 10 $\mu$m, une C.F.L. (longueur de fibre classée) de 0,01 à 0,2 mm.

2. Agent thixotropique selon la revendication 1, dans lequel la fibre de polyolefine comporte du polyéthylène.

3. Utilisation d'une fibre de polyolefine selon la revendication 1 ou la revendication 2 comme agent thixotropique.

4. Utilisation d'une fibre de polyolefine selon la revendication 1 ou la revendication 2 comme agent thixotropique, à l'exclusion de son utilisation dans un système aqueux.

5. Utilisation d'une fibre de polyolefine selon la revendication 1 ou la revendication 2 comme agent thixotropique dans une composition apte à être pulvérisée sur un support.

6. Utilisation de fibre de polyolefine selon l'une des revendications 3 à 5 dans laquelle la fibre comporte du polyéthylène.

7. Composition contenant un agent thixotropique selon la revendication 1 ou la revendication 2.

8. Composition selon la revendication 7 excluant un système aqueux.

9. Composition de résine de polyester armé de fibre conforme à la revendication 8.

10. Composition selon la revendication 7, 8 ou 9 dans laquelle la polyolefine comporte du polyéthylène.